# EUROPÄISCHE PATENTSCHRIFT

(11) **EP 2 575 039 B1**
(45) Veröffentlichungstag und Bekanntmachung des Hinweises auf die Patenterteilung: **14.12.2016**
(21) Anmeldenummer: 11183123.6
(22) Anmeldetag: 28.09.2011
(51) Int. Cl.: G06F 9/455

(54) **Verfahren und Anordnung zur Nutzung einer Ressource einer Hardware-Plattform mit zumindest zwei virtuellen Maschinen**
Method and assembly for use of a resource of a hardware platform with at least two virtual machines
Procédé et agencement pour l'utilisation d'une ressource d'une plateforme matérielle avec au moins deux machines virtuelles

(43) Veröffentlichungstag der Anmeldung: 03.04.2013
(73) Patentinhaber: Siemens Aktiengesellschaft, 80333 München (DE)
(72) Erfinder: Niesser, Otto, 90584 Allersberg (DE); Ünver, Halil Caglar, 90402 Nürnberg (DE)

(56) Entgegenhaltungen:
- US-A1- 2006 200 821
- US-A1- 2010 274 940
- Wikipedia: "Paravirtualization", , 7. September 2011 (2011-09-07), Seiten 1-3, XP55016151, Gefunden im Internet: URL:http://en.wikipedia.org/w/index.php?ti tle=Paravirtualization&oldid=448879809 [gefunden am 2012-01-11]

## Beschreibung

Die Erfindung betrifft ein Verfahren zur Nutzung einer gemeinsamen Ressource einer Hardware-Plattform mit zumindest zwei virtuellen Maschinen, und eine Hardware-Komponente mit mehreren virtuellen Maschinen.

Personal-Computer und ähnliche gebräuchliche Hardware-Architekturen werden vermehrt auch zur Realisierung von speicherprogrammierbaren Steuerungen, sog. "Soft-PLC's" (PLC = Programmable Logic Controller), verwendet. Für diese speicherprogrammierbaren Steuerungen werden in der Regel sog. Echtzeitbetriebssysteme verwendet, also Betriebssysteme, die derart ausgestaltet oder verändert sind, dass diese hohe Anforderungen an Reaktionszeiten, Zykluszeiten, Betriebssicherheit etc. erfüllen. Oft werden dabei Virtualisierungs-Techniken angewendet, d.h., dass eine Virtualisierungssteuerung / Virtualisierungssoftware (Virtual Machine Manager, Hypervisor) dazu verwendet wird, das Echtzeit-Betriebssystem in einer separaten virtuellen Laufzeitumgebung ablaufen zu lassen. Sofern mit derselben Hardware-Plattform auch andere Aufgaben erledigt werden sollen, können Nicht-Echtzeit-Betriebssysteme, auch "General Purpose Operation Systems" genannt, in weiteren virtuellen Maschinen parallel zum Ablauf gebracht werden.

Wenn in einer solchen Architektur beide Betriebssysteme auf eine nur einmal vorhandene Ressource (z.B. Netzwerkkarte, IDE-Controller etc.) zugreifen, wird der Zugriff darauf durch den Hypervisor in einer Synchronisationskomponente koordiniert. Das Nicht-Echtzeit-Betriebssystem, dessen Aufbau oft nicht geändert werden kann, greift dabei direkt auf die Hardware der Ressource zu, wobei diese Zugriffe vom Hypervisor abgefangen und entsprechend koordiniert werden müssen, um den Auftrag des Nicht-Echtzeit-Betriebssystems "quasi-parallel" zu Aufträgen des Echtzeit-Betriebssystems ausführen zu können.

Auf Seiten des Echtzeit-Betriebssystems kann prinzipiell genauso zugegriffen werden, jedoch ist es vorteilhaft, nicht auf einen Treiber analog dem Nicht-Echtzeit-Betriebssystems zurückzugreifen, sondern einen paravirtualisierten Treiber zu verwenden, was bedeutet, dass das Echtzeit-Betriebssystem von seinem Ablauf unter Kontrolle des Hypervisors Kenntnis hat und mit diesem auf optimierte Art und Weise interagiert.

Die oben beschriebene Vorgehensweise wird idealer Weise so ausgestaltet, dass Wartezeiten (z.B. Polling auf Hardware-Register) auf die Ressource das Echtzeit-Betriebssystem nicht in seiner Echtzeitperformance verschlechtern. Insbesondere dürfen Wartezeiten nicht während der Unterbrechung des Echtzeit-Betriebssystems im Hypervisor zurückgelegt werden. Trotzdem bleibt eine nicht vermeidbare Verzögerung bei der Interaktion mit dem Hypervisor, und zwar durch den impliziten bzw. programmierten Aussprung ("VmExit") in den Hypervisor (z.B. durch Überwachung von Speicher-, IO-Adressen, PCI-Config-Space etc. der zugegriffenen Ressource bzw. durch Hypercall beim paravirtualisierten Ansatz). Diese Verzögerung geht in ihrer Gesamtheit in die Echtzeitperformance ein, insbesondere in die Interrupt-Latenzzeit.

Aus der US 2006/0200821 A1 ist ein Verfahren zur Nutzung einer Ressource einer Hardware-Plattform mit zumindest zwei virtuellen Maschinen bekannt. Eine der virtuellen Maschinen umfasst eine isolierte Treiber-Domäne mit einem Treiber zum Zugriff auf eine Ressource der Hardware-Plattform. Anforderungen anderer Treiber auf die Ressource werden auf den Treiber in der isolierten-Treiber-Domäne umgeleitet.

Die US 2010/0274940 A1 offenbart ein Verfahren zum Steuern von Interrupts in einem virtuelle Maschinen nutzenden Computersystem.

Der Artikel "Paravirtualization" aus der Online-Enzyklopädie Wikipedia vom 7. September 2011 offenbart, dass eine virtuelle Maschine Kenntnis von seinem Ablauf in einer Virtualisierungsumgebung hat und mit einer als Hypervisor bezeichneten Virtualisierungssteuerung über ein API (Application Programmable Interface) interagiert.

Es ist also eine Aufgabe der vorliegenden Erfindung, die Leistungseinbußen seitens des Echtzeit-Betriebssystems beim Zugriff auf gemeinsam genutzte Ressourcen zu verringern oder zu vermeiden.

Es ist eine Kernidee der erfindungsgemäßen Lösung der Aufgabe, in einer virtuellen Maschine, welche nicht auf demselben Prozessorkern oder demselben Prozessor abläuft, auf dem das Echtzeit-Betriebssystem angeordnet ist, eine sogenannte Service-Maschine vorzusehen, welche die Zugriffe auf die Ressource durchführt. Erfindungsgemäß wird dabei seitens des Echtzeit-Betriebssystems ein paravirtualisierter Treiber eingesetzt, welcher jedoch nicht zum Zugriff auf die Ressource einen Aussprung in die Virtualisierungs-Software (Virtual Machine Manager, Hypervisor) vornimmt, sondern stattdessen entsprechende Anforderungen an die auf einem anderen Prozessorkern bzw. Prozessor angeordnete Service-Maschine richtet. Dadurch wird die Service-Maschine immer dann aktiviert, wenn das Echtzeit-Betriebssystem einen paravirtualisierten Auftrag an die (gemeinsam genutzte) Ressource absetzt.

Die Lösung der Aufgabe sieht insbesondere ein Verfahren gemäß dem Patentanspruch 1 und eine Hardware-Plattform gemäß dem Patentanspruch 9 vor.

Dabei wird ein Verfahren zur Nutzung einer Ressource einer Hardware-Plattform mit zumindest zwei virtuellen Maschinen vorgeschlagen, wobei eine erste der virtuellen Maschinen mit einem ersten Betriebssystem separat auf zumindest einem ersten Prozessorkern oder einem ersten Prozessor abläuft, und wobei eine Anzahl (mindestens eine) weiterer virtuellen Maschinen auf zumindest einem weiteren Prozessorkern oder Prozessor abläuft. Dabei ist eine der weiteren virtuellen Maschinen als eine Service-Maschine ausgebildet, wobei diese Service-Maschine einen ersten Treiber zum Zugriff auf die Ressource aufweist, wobei das erste Betriebssystem einen paravirtualisierten zweiten Treiber zum Zugriff auf die Ressource aufweist, und wobei Anforderungen des paravirtualisierten zweiten Treibers zum Zugriff auf die Ressource über die Virtualisierungssteuerung an den ersten Treiber gerichtet werden, wobei der erste Treiber die Anforderungen in Zugriffe auf die Ressource umsetzt. Im Zuge der Anforderungen des paravirtualisierten zweiten Treibers wird ein Inter-Prozessor-Interrupt von der ersten virtuellen Maschine zu dem Prozessor oder Prozessor-Kern mit der Service-Maschine übermittelt, wodurch die Service-Maschine in eine Verarbeitungsroutine des ersten Treibers einspringt.

Dadurch kann erreicht werden, dass die Service-Maschine nur bei Anforderungen des paravirtualisierten zweiten Treibers aktiviert wird, wogegen andere Interrupts der Hardware-Plattform unberücksichtigt bleiben können. Der paravirtualisierte zweite Treiber kann auf diese Weise einen Auftrag an den Prozessorkern bzw. Prozessor mit der Service-Maschine übermitteln, ohne die Abarbeitung des Echtzeit-Betriebssystems durch eine Interaktion mit der Virtualisierungssteuerung (Virtual Machine Manager, Hypervisor), z.B. durch einen "VM-Exit" oder einen "Hypercall", zu unterbrechen.

Weiter sieht die Lösung der Aufgabe eine Hardware-Plattform mit mehreren Prozessorkernen oder mehreren Prozessoren vor, mit mehreren virtuellen Maschinen, und mit einer Virtualisierungssteuerung zur Verwaltung der virtuellen Maschinen. Dabei weist eine erste virtuelle Maschine ein erstes Betriebssystem auf, wobei diese erste virtuelle Maschine separat zumindest auf einem ersten Prozessorkern oder einem ersten Prozessor abläuft. Eine Anzahl (mindestens eine) weiterer virtueller Maschinen läuft auf zumindest einem weiteren Prozessorkern oder Prozessor ab, wobei eine der weiteren virtuellen Maschinen als Service-Maschine ausgebildet ist, und wobei diese Service-Maschine einen ersten Treiber zum Zugriff auf die Ressource aufweist. Das erste Betriebssystem weist weiterhin einen paravirtualisierten zweiten Treiber zum Zugriff auf die Ressource auf, wobei der paravirtualisierte zweite Treiber derart eingerichtet ist, dass dessen Anforderungen zum Zugriff auf die Ressource an den ersten Treiber gerichtet werden, und wobei der erste Treiber zur Umsetzung der Anforderungen in Zugriffe auf die Ressource eingerichtet ist. Durch eine derart eingerichtete Hardware-Plattform können die Vorteile des erfindungsgemäßen Verfahrens realisiert werden.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für die erfindungsgemäße Hardware-Plattform. Die dabei beschriebenen Ausgestaltungen können sowohl als einzeln, als auch in freier Kombination miteinander realisiert werden.

Vorteilhaft ist das erste Betriebssystem als ein Echtzeit-Betriebssystem ausgestaltet, wobei ein solches Echtzeit-Betriebssystem auch bei Zugriffen auf Ressourcen, die von anderen virtuellen Maschinen und dortigen Betriebssystemen verwendet werden, in seinen Echtzeit-Eigenschaften nicht beeinträchtigt wird. Dabei kann in einer weiteren virtuellen Maschine zumindest ein weiteres Betriebssystem, insbesondere ein Nicht-Echtzeit-Betriebssystem (GPOS - "General Purpose Operation System"), ablaufen, wobei die weiteren virtuellen Maschinen mit dem einen oder den mehreren anderen Betriebssystemen auf anderen Prozessorkernen bzw. Prozessoren ausgeführt werden sollen, als das Echtzeit-Betriebsystem. In einer weiteren vorteilhaften Ausgestaltung kann auch eines der Nicht-Echtzeit-Betriebsysteme als Service-Maschine verwendet werden, so dass von der Hardware-Plattform auch nicht-zeitkritische Aufgaben neben dem Echtzeit-Betriebssystem ausgeführt werden können, ohne unnötig viele virtuelle Maschinen betreiben zu müssen. Als weiteres Betriebssystem (Nicht-Echtzeit-Betriebssystem) kann vorteilhaft ein sogenanntes allgemeines Betriebssystem verwendet werden, also z.B. ein gebräuchliches Betriebssystem für Personal-Computer wie beispielsweise Microsoft Windows, Linux und andere.

Insbesondere bei der Verwendung einer separaten Service-Maschine, die also außer dem Zugriff auf Hardware-Ressourcen keine anderen Aufgaben erfüllt, wird diese Service-Maschine vorteilhaft nur im Zuge der Anforderungen des paravirtualisierten zweiten Treibers aktiviert, so dass in Phasen, in denen kein Zugriff auf eine Ressource durchgeführt oder koordiniert werden muss, die Service-Maschine auch keine Rechenzeit etc. des entsprechenden Prozessors oder Kerns beansprucht.

Vorteilhaft wird als der Inter-Prozessor-Interrupt ein Start-Signal oder ein Init-Signal verwendet, welches erfindungsgemäß derart konfiguriert ist, dass anstelle einer Initialisierung oder eines Neu-Starts einer virtuellen Maschine ein Aufruf ("Einsprung") des entsprechenden ersten Treibers erfolgt. In einer weiteren vorteilhaften Ausgestaltung koordiniert die Service-Maschine mittels einer integrierten Synchronisierungseinrichtung Zugriffe des ersten und des weiteren Betriebssystems auf ein- und dieselbe Ressource. Dadurch kann die Virtualisierungssteuerung entsprechend kurze Ausführungszeiten einhalten. In einer alternativen Ausgestaltung kann jedoch stattdessen die Service-Maschine entsprechend aufwandsarm ausgestaltet werden, wenn mittels einer in der Virtualisierungssteuerung integrierten Synchronisierungseinrichtung die Zugriffe des ersten und des weiteren Betriebssystems auf ein- und dieselbe Ressource koordiniert werden.

Ausführungsbeispiele des erfindungsgemäßen Verfahrens werden nachfolgend anhand der Zeichnungen erläutert. Diese Ausführungsbeispiele dienen gleichzeitig der Erläuterung einer erfindungsgemäßen Hardware-Plattform.

Dabei zeigen:
- Figur 1: schematisch eine Hardware-Plattform mit zwei virtuellen Maschinen gemäß einem Verfahren und einer Anordnung aus dem Stand der Technik,
- Figur 2: eine Hardware-Plattform mit drei virtuellen Maschinen in einer ersten erfindungsgemäßen Ausgestaltung, und
- Figur 3: die Hardware-Plattform mit drei virtuellen Maschinen in einer zweiten erfindungsgemäßen Ausgestaltung.

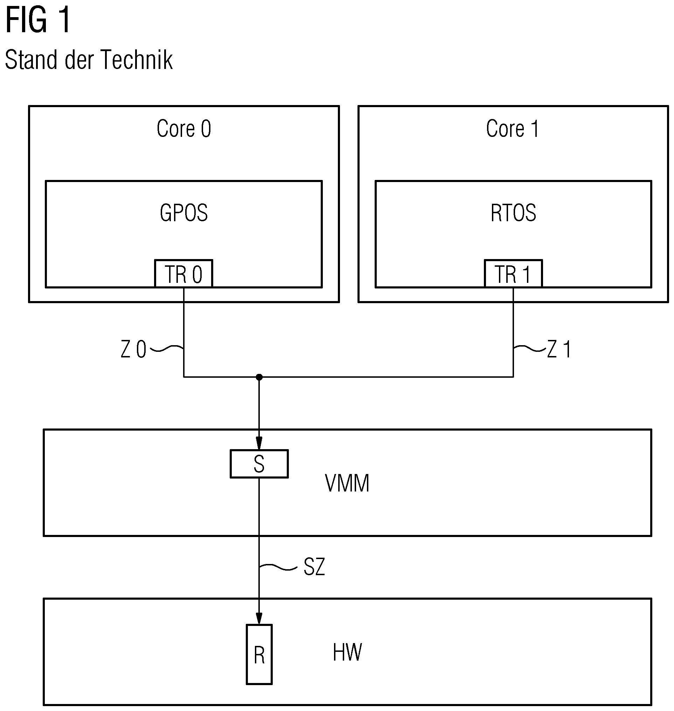

In der Figur 1 ist eine Hardware-Plattform HW dargestellt, welche eine Ressource R umfasst und wobei diese Ressource R von den Betriebssystemen RTOS, GPOS verwendet werden soll. Auf der Hardware-Plattform HW ist eine Virtualisierungssteuerung VMM installiert, wobei in einer ersten virtuellen Maschine ein Echtzeit-Betriebssystem RTOS abläuft, und in einer zweiten, weiteren virtuellen Maschine ein allgemeines Betriebssystem GPOS. Beide virtuellen Maschinen und damit beide Betriebssysteme GPOS, RTOS laufen auf getrennten Prozessorkernen Core 0, Core 1 ab. Jedes der Betriebssysteme GPOS, RTOS umfasst jeweils einen Treiber TR0, TR1 zum Zugriff auf die Ressource R, wobei die Zugriffe Z0, Z1 von der Virtualisierungssteuerung VMM abgefangen und mittels einer Synchronisierungs-Komponente S koordiniert werden, so dass über einen Zugriff SZ (synchronisierter Zugriff) letztlich auf die Ressource R zugegriffen wird, und umgekehrt. In dieser Variante, die aus dem Stand der Technik bekannt ist, können Zugriffe Z1 des Treibers TR1 des Echtzeit-Betriebssystems RTOS nur dann mit der Virtualisierungssteuerung VMM kommunizieren, wenn diese aktiv ist und zur protokollgemäßen Bearbeitung entsprechender Anforderungen bereitsteht. Die zur Abhilfe geeigneten erfindungsgemäßen Verfahrensschritte werden nachfolgend anhand der nachfolgenden Figuren erläutert.

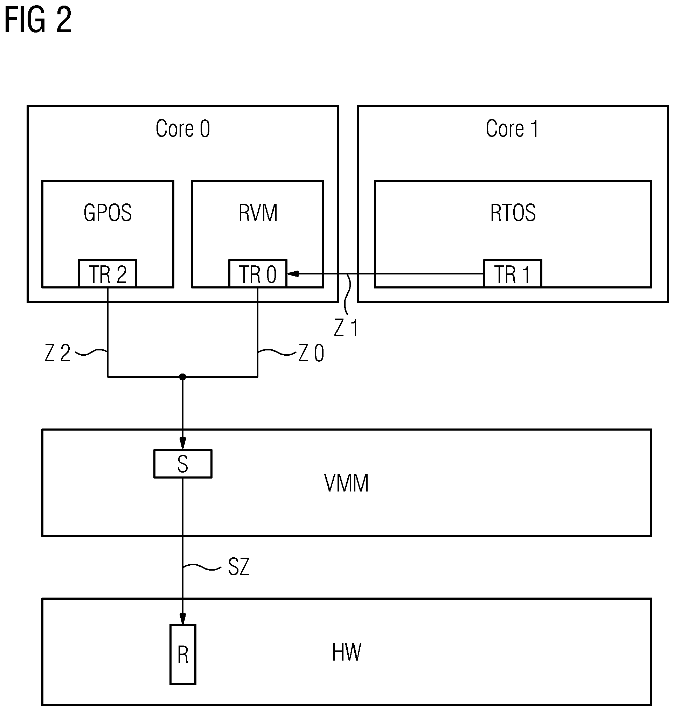

In der Figur 2 ist die aus der Figur 1 bekannte Hardware-Plattform HW mit der Ressource R (beispielsweise eine Netzwerkkarte oder ein IDE-Controller) dargestellt, wobei jedoch auf dem Prozessorkern Core 0 zwei virtuelle Maschinen (virtuelle Laufzeitumgebungen) ablaufen, wobei neben dem bereits aus der Figur 1 bekannten allgemeinen Betriebssystemen GPOS in einer weiteren virtuellen Maschine eine Service-Maschine RVM ("Ressource Virtual Machine") abläuft. Die Service-Maschine RVM weist den Treiber TR0 zum Zugriff auf die Ressource R auf, während die Betriebssysteme GPOS, RTOS ebenso Treiber TR2, TR1 zum Zugriff auf dieselbe Ressource R aufweisen. Im Gegensatz zu der Lösung aus dem Stand der Technik ist der Treiber TR1 des Echtzeit-Betriebssystems RTOS jedoch als paravirtualisierter Treiber ausgestaltet, wobei Zugriffe Z1 und die damit verbundenen Anforderungen (z.B. Meldungen) dieses Treibers TR1 an den Treiber TR0 der Service-Maschine RVM gerichtet werden. Vorteilhaft löst dazu das Echtzeit-Betriebssystem RTOS bzw. der Treiber TR1 einen Inter-Prozessor-Interrupt an den Prozessorkern Core 0 aus, z.B. ein Init-Signal oder ein Start-Signal, wobei in einer "Message-box" oder mit einer anderen Benachrichtigungsmethode die Informationen darüber gespeichert wird, dass dieser Inter-Prozessor-Interrupt einen Kontext-Wechsel in die Service-Maschine RVM und dabei den "Einsprung" in eine Software-Routine des Treibers TR0 bewirken soll. Der Inter-Prozessor-Interrupt führt also zunächst dazu, dass der Prozessorkern Core 0 in die Abarbeitung der Virtualisierungssteuerung VMM wechselt, wonach die Virtualisierungssteuerung VMM nach Auswertung der "Message-Box" den Aufruf (Kontext-Wechsel) der Service-Maschine RVM auslöst, wonach in der Folge auch der Aufruf des Treibers TR0 erfolgt. Durch die hohe Priorität des Inter-Prozessor-Interrupts wird die Virtualisierungssteuerung VMM und damit in der Folge der Treiber TR0 nahezu unverzüglich aktiviert, so dass die Anforderungen des Zugriffs Z1 nahezu direkt von dem Treiber TR1 zu dem Treiber TR0 übermittelt werden können. Der Treiber TR0 setzt nun die Anforderungen von dem "paravirtualisierten Protokoll" in (dem Standard entsprechende) Zugriffe Z0 um und leitet diese entweder explizit an die Virtualisierungssteuerung VMM weiter, oder aber diese Zugriffe Z0 werden durch die Virtualisierungssteuerung VMM abgefangen. Eine Synchronisierungs-Einrichtung S der Virtualisierungssteuerung VMM koordiniert den Zugriff Z0 mit etwaigen anderen Zugriffen Z2 des allgemeinen Betriebssystems GPOS und erzeugt somit synchronisierte Zugriffe SZ zum Zugriff auf die Ressource R. Meldungen und Daten der Ressource R, die beispielsweise aus dem Zugriff SZ resultieren, werden auf umgekehrtem Wege verarbeitet.

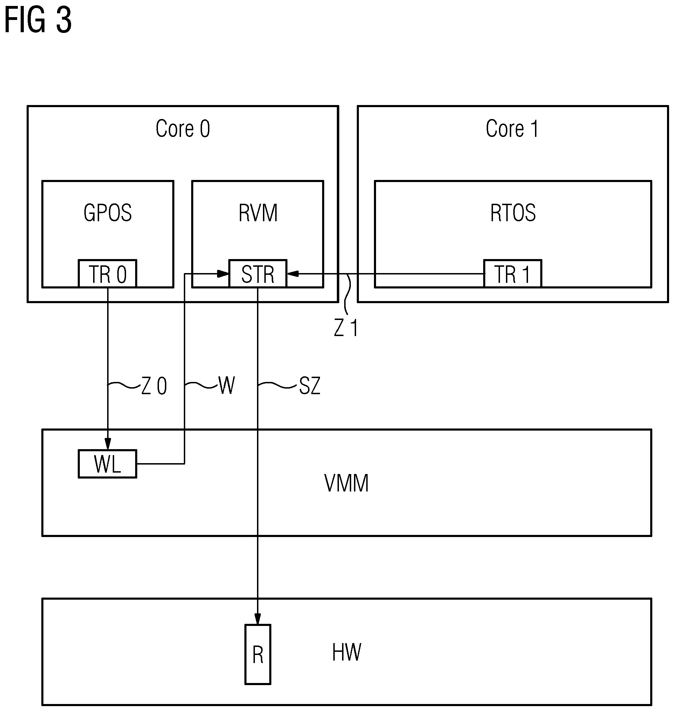

In der Figur 3 ist eine zur Figur 2 ähnliche Anordnung dargestellt, wobei jedoch im Unterschied zur Anordnung gemäß der Figur 2 die Synchronisierung der Zugriffe Z0, Z2 nicht in der Virtualisierungssteuerung VMM stattfindet. Statt dessen werden die Zugriffe Z0 des allgemeinen Betriebssystems GPOS durch eine Weiterleitungs-Einrichtung WL der Virtualisierungssteuerung VMM an den Treiber STR der Service-Maschine RVM weitergeleitet, wobei die weitergeleiteten Zugriffe W innerhalb der Service-Maschine RVM mit den Zugriffen Z1 des Echtzeit-Betriebssystems RTOS synchronisiert werden. Dies hat zur Folge, dass die synchronisierten Zugriffe SZ nicht von der Virtualisierungssteuerung VMM abgefangen werden müssen, sondern auch dann direkt von der Service-Maschine RVM an die Ressource R übermittelt werden können, wenn die Virtualisierungssteuerung VMM nicht aktiv ist. In einer weiteren Ausgestaltung kann die Weiterleitungseinrichtung WL auch entfallen, wenn der Treiber TR0 die Zugriffe Z0 auf eine andere Weise, z.B. direkt, an die Service-Maschine RVM und den Treiber STR übermittelt. Dies entspricht einem paravirtualisierten Ansatz für das allgemeine Betriebssystem GPOS.

Grundsätzlich sind zu den beschriebenen Verfahren und Anordnungen zahlreiche Varianten möglich. So kann es für verschiedene Ressourcen R sowohl eine, als auch mehrere Instanzen einer Service-Maschine RVM ("Ressource Virtual Maschine") geben. Mehrere Instanzen können dabei unabhängig voneinander "parallel" arbeiten und sogar verteilt auf verschiedenen Prozessorkernen bzw. Prozessoren zum Ablauf kommen. Ebenso kann ein- und dieselbe Instanz des Echtzeit-Betriebssystems RTOS auf mehreren Prozessorkernen ablaufen; dies erfordert jedoch eine Zuordnung, von welchem der Prozessorkern des Echtzeit-Betriebssystems RTOS ein Zugriff Z1 an die Service-Maschine RVM gestellt wurde. Umgekehrt können auch mehrere Echtzeit-Betriebssysteme RTOS auf unterschiedlichen Prozessor-Kernen zum Ablauf gebracht werden; dies erfordert eine Zuordnung, von welchem der Echtzeit-Betriebssysteme RTOS und von welchem Prozessor-Kern Core 0, Core 1, ... der Auftrag (Zugriff Z1) an die Service-Maschine RVM gestellt wurde. Weitere Konstellationen von mehreren Prozessor-Kernen, Prozessoren, Echtzeit-Betriebssystemen RTOS und anderen Betriebssystemen GPOS sind denkbar.

## Patentansprüche

1. Verfahren zur Nutzung einer Ressource (R) einer Hardware-Plattform (HW) mit zumindest zwei virtuellen Maschinen,
wobei auf der Hardware-Plattform (HW) eine Virtualisierungssteuerung (VMM) zur Verwaltung der virtuellen Maschinen abläuft,
wobei eine erste der virtuellen Maschinen mit einem ersten Betriebssystem (RTOS) separat auf zumindest einem ersten Prozessorkern (Core 1) oder einem ersten Prozessor abläuft,
wobei eine Anzahl weiterer virtueller Maschinen auf zumindest einem weiteren Prozessorkern (Core 0) oder Prozessor abläuft,
wobei eine der weiteren virtuellen Maschinen als eine Service-Maschine (RVM) ausgebildet ist, wobei diese Service-Maschine (RVM) einen ersten Treiber (TR0) zum Zugriff auf die Ressource (R) aufweist,
wobei das erste Betriebssystem (RTOS) einen paravirtualisierten zweiten Treiber (TR1) zum Zugriff auf die Ressource (R) aufweist, und
wobei Anforderungen des paravirtualisierten zweiten Treibers (TR1) zum Zugriff auf die Ressource (R) über die Virtualisierungssteuerung (VMM) an den ersten Treiber (TR0) gerichtet werden, wobei der erste Treiber (TR0) die Anforderungen in Zugriffe auf die Ressource (R) umsetzt, und
wobei im Zuge der Anforderungen des paravirtualisierten zweiten Treibers (TR1) ein Inter-Prozessor-Interrupt von der ersten virtuellen Maschine zu dem weiteren Prozessorkern (Core 0) oder Prozessor mit der Service-Maschine (RVM) übermittelt wird, wobei die Service-Maschine (RVM) in eine Verarbeitungsroutine des ersten Treibers TR0) einspringt.

2. Verfahren nach Patentanspruch 1,
**dadurch gekennzeichnet,**
**dass** als das erste Betriebssystem (RTOS) ein Echtzeit-Betriebssystem eingesetzt wird.

3. Verfahren nach einem der vorhergehenden Patentansprüche, **dadurch gekennzeichnet,**
**dass** auf einer der weiteren virtuellen Maschinen zumindest ein weiteres Betriebssystem (GPOS) abläuft.

4. Verfahren nach Patentanspruch 3,
**dadurch gekennzeichnet,**
**dass** als das weitere Betriebssystem (GPOS) ein allgemeines Betriebssystem verwendet wird.

5. Verfahren nach einem der vorhergehenden Patentansprüche, **dadurch gekennzeichnet,**
**dass** die Service-Maschine (RVM) im Zuge der Anforderungen des paravirtualisierten zweiten Treibers (TR1) aktiviert wird.

6. Verfahren nach Patentanspruch 5,
**dadurch gekennzeichnet,**
**dass** als der Inter-Prozessor-Interrupt ein Start-Signal oder ein Init-Signal verwendet wird.

7. Verfahren nach einem der Patentansprüche 3 bis 6,
**dadurch gekennzeichnet,**
**dass** die Service-Maschine (RVM) mittels einer Synchronisierungseinrichtung (S) Zugriffe des ersten und des weiteren Betriebssystems (GPOS) auf ein- und dieselbe Ressource koordiniert.

8. Verfahren nach einem der Patentansprüche 3 bis 6,
**dadurch gekennzeichnet,**
**dass** die Virtualisierungssteuerung (VMM) mittels einer Synchronisierungseinrichtung (S) Zugriffe des ersten und des weiteren Betriebssystems (GPOS) auf ein- und dieselbe Ressource (R) koordiniert.

9. Hardware-Plattform (HW) mit mehreren Prozessorkernen (Core 0, Core 1) oder mehreren Prozessoren,
mit mehreren virtuellen Maschinen, und
mit einer Virtualisierungssteuerung (VMM) zur Verwaltung der virtuellen Maschinen,
**dadurch gekennzeichnet,**
**dass** eine erste virtuelle Maschine ein erstes Betriebssystem (RTOS) aufweist, wobei diese erste virtuelle Maschine separat zumindest auf einem ersten Prozessorkern (Core 1) oder einem ersten Prozessor abläuft,
wobei eine Anzahl weiterer virtueller Maschinen auf zumindest einem weiteren Prozessorkern (Core 0) oder Prozessor abläuft,
**dass** eine der weiteren virtuellen Maschinen als Service-Maschine (RVM) ausgebildet ist,
**dass** diese Service-Maschine (RVM) einen ersten Treiber (TR0) zum Zugriff auf die Ressource (R) aufweist, dass das erste Betriebssystem (RTOS) einen paravirtualisierten zweiten Treiber (TR1) zum Zugriff auf die Ressource aufweist,
**dass** der paravirtualisierte zweite Treiber (TR1) derart eingerichtet ist, dass dessen Anforderungen zum Zugriff auf die Ressource (R) über die Virtualisierungssteuerung (VMM) an den ersten Treiber (TR0) gerichtet werden, wobei der erste Treiber (TR0) zur Umsetzung der Anforderungen in Zugriffe (Z0) auf die Ressource (R) eingerichtet ist, und
**dass** der erste virtuelle Maschine dazu eingerichtet ist, im Zuge der Anforderungen des paravirtualisierten zweiten Treibers (TR1) ein Inter-Prozessor-Interrupt zu dem weiteren Prozessorkern (Core 0) oder Prozessor mit der Service-Maschine (RVM) zu übermitteln, wobei die Service-Maschine (RVM) in eine Verarbeitungsroutine des ersten Treibers (TR0) einspringt.

## Claims

1. Method for using a resource (R) of a hardware platform (HW) with at least two virtual machines,
wherein a virtualization controller (VMM) for administering the virtual machines runs on the hardware platform (HW),
wherein a first machine of the virtual machines with a first operating system (RTOS) runs separately on at least a first processor core (core 1) or a first processor,
wherein a number of further virtual machines runs on at least one further processor core (core 0) or processor,
wherein one of the further virtual machines is embodied as a service machine (RVM), wherein this service machine (RVM) has a first driver (TR0) for accessing the resource (R),
wherein the first operating system (RTOS) has a para-virtualized second driver (TR1) for accessing the resource (R), and
wherein requests by the para-virtualized second driver (TR1) to access the resource (R) via the virtualization controller (VMM) are directed to the first driver (TR0), wherein the first driver (TR0) converts the requests into access operations to the resource (R), and
wherein in the course of the requests by the para-virtualized second driver (TR1) an inter-processor interrupt is transmitted from the first virtual machine to the further processor core (core 0) or processor with the service machine (RVM), wherein the service machine (RVM) jumps into a processing routine of the first driver (TR0).

2. Method according to Patent Claim 1,
**characterized**
**in that** a real-time operating system is used as the first operating system (RTOS).

3. Method according to either of the preceding patent claims,
**characterized**
**in that** at least one further operating system (GPOS) runs on one of the further virtual machines.

4. Method according to Patent Claim 3,
**characterized**
**in that** a general operating system is used as the further operating system (GPOS).

5. Method according to one of the preceding patent claims,
**characterized**
**in that** the service machine (RVM) is activated in the course of the requests by the para-virtualized second driver (TR1).

6. Method according to Patent Claim 5,
**characterized**
**in that** a start signal or an Init signal is used as the inter-processor interrupt.

7. Method according to one of Patent Claims 3 to 6,
**characterized**
**in that** the service machine (RVM) coordinates, by means of a synchronization device (S), access operations by the first and the further operating system (GPOS) to the same resource.

8. Method according to one of Patent Claims 3 to 6,
**characterized**
**in that** the virtualization controller (VMM) coordinates, by means of a synchronization device (S), access operations by the first and the further operating system (GPOS) to the same resource (R).

9. Hardware platform (HW) having a plurality of processor cores (core 0, core 1) or a plurality of processors, having a plurality of virtual machines, and having a virtualization controller (VMM) for administering the virtual machines, **characterized**
**in that** a first virtual machine has a first operating system (RTOS), wherein this first virtual machine runs separately at least on a first processor core (core 1) or a first processor, wherein a number of further virtual machines runs on at least one further processor core (core 0) or processor,
**in that** one of the further virtual machines is embodied as a service machine (RVM),
**in that** this service machine (RVM) has a first driver (TR0) for accessing the resource (R),
**in that** this first operating system (RTOS) has a para-virtualized second driver (TR1) for accessing the resource,
**in that** the para-virtualized second driver (TR1) is configured in such a way that its requests to access the resource (R) via the virtualization controller (VMM) are directed to the first driver (TR0), wherein the first driver (TR0) is configured to convert the requests into access operations (Z0) to the resource (R), and
**in that** the first virtual machine is configured to transmit an inter-processor interrupt to the further processor core (core 0) or processor with the service machine (RVM) in the course of the requests by the para-virtualized second driver (TR1), wherein the service machine (RVM) jumps into a processing routine of the first driver (TR0).

## Revendications

1. Procédé d'utilisation d'une ressource (R) d'une plateforme (HW) matérielle par au moins deux machines virtuelles,
dans lequel il se déroule, sur la plateforme (HW) matérielle, une commande (VMM) de virtualisation pour la gestion des machines virtuelles,
dans lequel une première des machines virtuelles passe avec un premier système (RTOS) de fonctionnement séparément sur au moins un premier noyau (Core 1) de processeur ou un premier processeur,
dans lequel un certain nombre d'autres machines virtuelles passe sur au moins un autre noyau (Core 0) de processeur ou un autre processeur,
dans lequel l'une des autres machines virtuelles est constituée en machine de service (RVM), cette machine de service (RVM) ayant un premier pilote (TR0) pour accéder à la ressource (R),
dans lequel le premier système (RTOS) de fonctionnement a un deuxième pilote (TR) paravirtualisé pour accéder à la ressource (R) et
dans lequel des demandes du deuxième pilote (TR1) paravirtualisé d'accès à la ressource (R) sont dirigées par la commande (VMM) de virtualisation sur le premier pilote (TR0), le premier pilote (TR0) transformant les demandes en des accès à la ressource (R) et
dans lequel, au cours des demandes du deuxième pilote (TR) paravirtualisé, une interruption interprocesseur est transmise de la première machine virtuelle à l'autre noyau (Core 1) de processeur ou à l'autre processeur par la machine de service (RVM), la machine de service (RVM) sautant dans un programme de traitement du premier pilote (TR).

2. Procédé suivant la revendication 1,
**caractérisé**
**en ce que** l'on utilise un système de fonctionnement en temps réel comme premier système (RTOS) de fonctionnement.

3. Procédé suivant l'une des revendications précédentes,
**caractérisé**
**en ce qu'**au moins un autre système (GPOS) de fonctionnement se déroule sur l'une des autres machines virtuelles.

4. Procédé suivant la revendication 3,
**caractérisé**
**en ce que** l'on utilise un système de fonctionnement général comme autre système (GPOS) de fonctionnement.

5. Procédé suivant l'une des revendications précédentes,
**caractérisé**
**en ce que** l'on active la machine de service (RVM) au cours des demandes du deuxième pilote (TR1) paravirtualisé.

6. Procédé suivant la revendication 5,
**caractérisé**
**en ce que** l'on utilise un signal de début ou un signal d'initiation comme interruption d'interprocesseur.

7. Procédé suivant l'une des revendications 3 à 6,
**caractérisé**
**en ce que** la machine de service (RVM) coordonne, sur une seule et même ressource, au moyen d'un dispositif (S) de synchronisation, des accès du premier et de l'autre système (GPOS) de fonctionnement.

8. Procédé suivant l'une des revendications 3 à 6,
**caractérisé**
**en ce que** la commande (VMM) de virtualisation coordonne, sur une seule et même ressource (R), au moyen d'un dispositif (S) de synchronisation, des accès du premier et de l'autre système (GPOS) de fonctionnement.

9. Plateforme (HW) matérielle ayant plusieurs noyaux
(Core 0, Core 1) de processeur ou plusieurs processeurs, ayant plusieurs machines virtuelles et
ayant une commande (VMM) de virtualisation pour gérer les machines virtuelles,
**caractérisée**
**en ce qu'**une première machine virtuelle a un premier système (RTOS) de fonctionnement, cette première machine virtuelle passant séparément au moins sur un premier noyau (Core 1) de processeur ou sur un premier processeur, dans lequel un certain nombre d'autres machines virtuelles passe sur au moins un autre noyau (Core 0) de processeur ou un autre processeur,
**en ce que** l'une des autres machines virtuelles est constituée en machine de service (RVM),
**en ce que** cette machine (RVM) de service a un premier pilote (TR0) pour accéder à la ressource (R),
**en ce que** le premier système (RTOS) de fonctionnement a un deuxième pilote (TR) paravirtualisé pour accéder à la ressource,
**en ce que** le deuxième pilote (TR) paravirtualisé est agencé de manière à ce que ses demandes d'accès à la ressource (R) soient, par la commande (VMM) de virtualisation, dirigées sur le premier pilote (TR), le premier pilote (TR) étant conçu pour transformer les demandes en des accès (Z) à la ressource (R) et
**en ce que** la première machine virtuelle est conçue pour, au cours des demandes du deuxième pilote (TR1) paravirtualisé, transmettre une interruption d'interprocesseur à l'autre noyau (Core 0) de processeur ou à l'autre processeur par la machine de service (RVM), la machine (RVM) de service sautant dans un programme de traitement du premier pilote (TR).
